# EUROPEAN PATENT SPECIFICATION

(11) **EP 3 691 305 B1**
(45) Date of publication and mention of the grant of the patent: **02.11.2022**
(21) Application number: 18862164.3
(22) Date of filing: 11.09.2018
(51) Int. Cl.: H04W 4/14, H04W 4/18, H04W 88/06, H04W 4/44, H04W 36/14, H04W 36/30, H04L 67/12, H04L 69/08, H04L 69/18

(54) **VEHICLE DATA TRANSMISSION METHOD AND RECEIVING METHOD, AND CORRESPONDING SYSTEM**
VERFAHREN ZUR ÜBERTRAGUNG UND ZUM EMPFANG VON FAHRZEUGDATEN UND ENTSPRECHENDES SYSTEM
PROCÉDÉ DE TRANSMISSION DE DONNÉES DE VÉHICULE, ET PROCÉDÉ DE RÉCEPTION, ET SYSTÈME CORRESPONDANT

(30) Priority: 30.09.2017 CN 201710919998
(43) Date of publication of application: 05.08.2020
(73) Proprietor: NIO (Anhui) Holding Co., Ltd., Hefei City, Anhui Province (CN)
(72) Inventor: YU, Bin, Anting, Jiading, Shanghai (CN)
(74) Representative: Vossius & Partner Patentanwälte Rechtsanwälte mbB
(86) International application number: PCT/CN2018/105000
(87) International publication number: WO 2019/062537

(56) References cited:
- CN-A- 104 618 479
- CN-A- 104 618 479
- CN-A- 106 471 790
- CN-A- 107 770 740
- CN-A- 107 770 740
- CN-U- 202 783 026
- US-A1- 2003 220 835
- US-A1- 2012 083 995
- US-A1- 2015 289 116

## Description

This application claims the benefit and priority from Chinese Patent Application CN201710919998.9, filed September 30, 2017.

### FIELD OF THE INVENTION

The present disclosure relates to vehicles, and more particularly, the present disclosure relates to transmission technology of on-vehicle data.

### BACKGROUND OF THE INVENTION

In today's society, with the popularization of intelligent vehicles, more and more vehicles are capable of accessing the Internet of Vehicles services through network, and through the Internet of Vehicles services, the driving experience that cannot be provided by traditional vehicles are be enjoyed. However, due to the limitations of the physical environment, the network is poor or even unavailable in many cases. For example, in a mountainous environment with imperfect network facilities, accidents may cause the failure of devices connected by the network, and network communication modules may be maliciously destroyed by people, etc., resulting in the inability to connect to the Internet of Vehicles through high-speed network channels. In the above-mentioned similar situations, the Internet of Vehicles system cannot obtain vehicle-related data as soon as possible, so it cannot provide relevant services such as emergency rescue, remote vehicle control, positioning and so on. Therefore, if the vehicle can report the data to the Internet of Vehicles back-end service through other data channels, the above situation can be avoided to the greatest extent possible so that the user experience is improved.

Chinese Patent publication CN104618479A relates to a method for achieving information transmission of a vehicle-mounted cloud service terminal of a commercial vehicle in a layering communication mode. In particular, it teaches that basic information is divided into different types, and that when the message transmission rate of existing wireless network is lower than the first threshold values preset, switch to uploading data under GPRS state, and that when the GPRS data transmission rate is lower than the second threshold values preset, use short message mode uploading data. US patent publication US2015/0289116A1 relates to a secure SMS messaging, and teaches converting PDP (proprietary data parcel) into a bundle of SMS (short message service) messages.

### SUMMARY OF THE INVENTION

The main object of the present disclosure is to provide an on-vehicle data transmission method capable of efficiently transmitting on-vehicle data via a second communication network when a first communication network is abnormal. The present invention is as defined in claims 1, 5, 7 and 8. Further embodiments are disclosed in the dependent claims.

Illustratively, in the on-vehicle data transmission method according to an example of the present disclosure, the on-vehicle data is divided into different types of on-vehicle data to be transmitted according to a first standard, and for each of the different types of on-vehicle data to be transmitted, the data that is capable of expressing expected complete content is long data; and the converting the on-vehicle data to be transmitted into data in the preset format is to convert the long data into corresponding one or more short messages including a message header and a message body, wherein the message header at least indicates a relationship between the short message where the message header is located and the long data, and the message body indicates the content represented by the short message.

Illustratively, in the on-vehicle data transmission method according to an example of the present disclosure, the relationship between the short message where the message header is located and the long data indicates whether the content represented by the short message is all or a part of the long data; and if the content represented by the short message is a part of the long data, the message header further indicates which part of the short messages corresponding to the long data the short message where the message header is located is.

Illustratively, in the on-vehicle data transmission method according to an example of the present disclosure, the long data is converted into corresponding multiple short messages, and the message body of each short message is capable of independently expressing sub-data having independent meaning in the long data, wherein the first standard is set according to service type directed to the on-vehicle data. In addition, a transmission capacity of the first communication network is stronger than that of the second communication network.

Illustratively, in each example of the present disclosure, the first communication network is a 3G network, a TD-LTE network, a TD-LTE-A network, a 4G+ network, a 5G network, or a network based on the IEEE 802 standard, and the second communication network is any one of GSM, GPRS and EDGE network.

Illustratively, in each example of the present disclosure, the short message is a short message based on PDU encoding.

According to an aspect of the present disclosure, an on-vehicle data receiving method is also provided, which includes: when on-vehicle data transmitted by an on-vehicle communication module through a second communication network and having a preset format is received, parsing the received on-vehicle data and processing; wherein a transmission capacity of the second communication network is weaker than that of a first communication network, and the on-vehicle communication module transmits data via the second communication network only when data transmission via the first communication network is abnormal.

According to still another aspect of the present disclosure, an on-vehicle data transmission system is also provided, which includes: an on-vehicle communication module configured to transmit on-vehicle data to an external data processing device through a network, and switch to transmitting the on-vehicle data via a second communication network if it is determined that a first communication network is abnormal; and a conversion unit configured to convert the on-vehicle data to be transmitted into data in a preset format for transmission by the on-vehicle communication module, when the on-vehicle communication module switches to transmitting the on-vehicle data via the second communication network; wherein the conversion unit is a part of the on-vehicle communication module or is independent from the on-vehicle communication module.

According to the on-vehicle data transmission system of the present disclosure, illustratively, the on-vehicle data is divided into different types of on-vehicle data to be transmitted according to a first standard, and for each of the different types of on-vehicle data to be transmitted, the data that is capable of expressing expected complete content is long data; and the conversion unit is configured to convert the long data into corresponding one or more short messages including a message header and a message body, wherein the message header at least indicates a relationship between the short message where the message header is located and the long data, and the message body indicates the content represented by the short message.

According to the on-vehicle data transmission system of the present disclosure, illustratively, a transmission capacity of the first communication network is stronger than that of the second communication network.

According to the on-vehicle data transmission system of the present disclosure, illustratively, the first communication network is a 3G network, a TD-LTE network, a TD-LTE-A network, a 4G+ network, a 5G network, or a network based on the IEEE 802 standard, and the second communication network is any one of GSM, GPRS and EDGE network.

The present disclosure also provides a receiving end for receiving on-vehicle data, which includes: a receiving unit configured to receive on-vehicle data transmitted by an on-vehicle communication module; and a processing unit configured to, when the on-vehicle data received by the receiving unit is on-vehicle data in a preset format, parse and process the received on-vehicle data; wherein the on-vehicle data in the preset format is data transmitted by the on-vehicle communication module via a second communication network when a first communication network is abnormal.

According to the receiving end for receiving on-vehicle data provided by the present disclosure, illustratively, the on-vehicle data is divided into different types of on-vehicle data according to a first standard, and for each of the different types of the on-vehicle data, the data that is capable of expressing expected complete content is long data, and the on-vehicle data in the preset format is one or more short messages including a message header and a message body corresponding to the long data and obtained after conversion; and the processing unit is configured to parse the received short messages; wherein if the message header indicates that the short message corresponds to the long data, then the processing unit performs subsequent processing; if the message header indicates that the short message corresponds to a part of the long data, then the processing unit performs subsequent processing after all the short messages corresponding to the long data are received; or if not all the short messages corresponding to the long data are received but the waiting time is exceeded, then the processing unit performs subsequent processing.

The present disclosure provides an on-vehicle data transmission system, which includes:
an on-vehicle communication module provided in the vehicle, which is configured to transmit on-vehicle data via a network, and configured to switch to transmitting the on-vehicle data via a second communication network if it is determined that a first communication network is abnormal;
a conversion unit, which is configured to convert the on-vehicle data to be transmitted into data in a preset format for transmission by the on-vehicle communication module when the on-vehicle communication module switches to transmitting the on-vehicle data via the second communication network, and the conversion unit is a part of the on-vehicle communication module or is independent from the on-vehicle communication module;
a receiving unit provided at an on-vehicle data receiving end, which is configured to receive the on-vehicle data transmitted by the on-vehicle communication module; and
a processing unit provided at the on-vehicle data receiving end, which is configured to parse and process the received on-vehicle data when the on-vehicle data received by the receiving unit is on-vehicle data in a preset format.

In the on-vehicle data transmission system described herein, illustratively, the on-vehicle data is divided into different types of on-vehicle data to be transmitted according to a first standard, and for each of the different types of the on-vehicle data to be transmitted, the data that is capable of expressing expected complete content is long data; the conversion unit is configured to convert the long data into corresponding one or more short messages including a message header and a message body, wherein the message header at least indicates a relationship between the short message where the message header is located and the long data, and the message body indicates the content represented by the short message; and the processing unit is configured to parse the received short messages; wherein if the message header indicates that the short message corresponds to the long data, then the processing unit performs subsequent processing; if the message header indicates that the short message corresponds to a part of the long data, then the processing unit performs subsequent processing after all the short messages corresponding to the long data are received; or if not all the short messages corresponding to the long data are received but the waiting time is exceeded, then the processing unit performs subsequent processing.

In the on-vehicle data transmission system described herein, illustratively, a transmission capability of the first communication network is stronger than that of the second communication network.

According to the present disclosure, a storage medium for storing instructions is also provided, wherein when the instructions are executed, the on-vehicle data transmission method as described in the above examples is implemented.

According to the present disclosure, a processor on which instructions are stored is also provided, wherein when the instructions are executed by the processor, the on-vehicle data transmission method as described in the above examples is implemented.

According to the present disclosure, a storage medium for storing instructions is also provided, wherein when the instructions are executed, the on-vehicle data receiving method as described in the above examples is implemented.

According to the present disclosure, a processor on which instructions are stored is also provided, wherein when the instructions are executed, the on-vehicle data receiving method as described in the above examples is implemented.

### BRIEF DESCRIPTION OF THE DRAWINGS

FIG. 1 is a schematic flowchart of a method for configuring a data format of short message of the present disclosure.
FIG. 2 is a schematic flowchart of an on-vehicle data transmission method according to an example of the present disclosure.
FIG. 3 is a schematic flowchart of the method in FIG. 2 when implemented in the application scene shown in FIG. 1.
FIG. 4 is a schematic structural view of an on-vehicle data transmission system according to an example of the present disclosure.
FIG. 5 is a schematic structural view of an on-vehicle data transmission system according to an example of the present disclosure.

### DETAILED DESCRIPTION OF THE EMBODIMENT(S) OF THE INVENTION

To further elaborate on the technical means adopted by the present disclosure to achieve the expected object of the present disclosure and the effects, the specific implementations, methods, structures, features and effects of the short message data reporting method and system proposed by the present disclosure will be described in detail below in conjunction with the drawings and preferred embodiments.

The on-vehicle data transmission method according to an example of the present disclosure may be applied to a system including a vehicle and an external data processing device. The external data processing device mentioned herein refers to a data processing device which is not disposed in the vehicle and may be a remote server (such as a remote diagnosis server, etc.), or a cloud server, or various portable electronic devices (such as mobile phones, etc.), and all the data processing devices which establish a direct or indirect communication relationship with the vehicle and can receive data transmitted from the vehicle should be included herein.

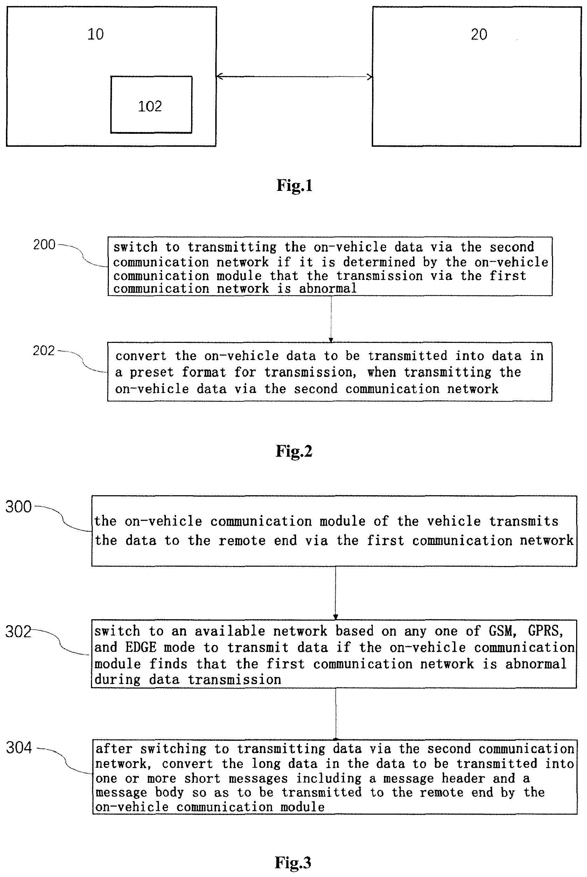

FIG. 1 is a schematic structural view of an exemplary application scene in which the on-vehicle data transmission method is adopted. In this application scene, sensors, cameras, and/or other electronic systems provided in the vehicle 10 acquire relevant data of the vehicle. An on-vehicle communication module 102 provided in the vehicle 10 transmits the acquired data to a remote server (hereinafter also referred to as a remote end) 20. In some cases, the on-vehicle communication module 102 will also receive communication feedback from the remote end 20, depending on the need for the vehicle to interact with the remote end. Herein, the relevant data of the vehicle as mentioned is either related to the vehicle itself (such as tire pressure, vehicle speed, wheel speed, etc.) or to the external environment during the traveling of the vehicle, such as road conditions.

Under normal circumstances, the on-vehicle communication module 102 of the vehicle 10 communicates with the remote end 20 through a first communication network, which refers to a TD-LTE network, TD-LTE-A network, a 4G+ network, a network based on the IEEE 802 standard, or a 5G network, which have large bandwidths sufficient to transmit voice and/or video, as well as communication networks that may arise in the future and have a network transmission capability superior to the networks listed above.

FIG. 2 is a schematic flowchart of an on-vehicle data transmission method according to an example of the present disclosure. As shown in FIG. 2, in step 200, in a process of transmitting on-vehicle data to the external data processing device via a first communication network, if it is determined by the on-vehicle communication module that the transmission via the first communication network is abnormal, the on-vehicle communication module switches to transmitting the on-vehicle data via a second communication network. The on-vehicle communication module is a communication module used by the vehicle to send/receive data transmitted via a network. It may be a communication module fixedly disposed on the vehicle, or a communication module that is not fixed relative to the vehicle, but may be carried by the user. Such a portable communication module may be a communication module dedicated to sending/receiving, or may be a device such as a mobile phone that can implement a communication function. The communication module itself has functions of detecting whether there is an available communication network and determining the status of the communication network. The abnormality of the first communication network mentioned herein includes that the first communication network cannot be detected, the signal of the first communication network is too weak to effectively transmit the data, the data transmitted via the first communication network cannot be safely received by a receiving end (e.g., the on-vehicle communication module as the sending end cannot receive ACK messages from the receiving end, etc.), and various abnormal conditions.

In step 202, when the on-vehicle communication module switches to transmitting the on-vehicle data via the second communication network, it converts the on-vehicle data to be transmitted into data in a preset format for transmission. According to an example of the present disclosure, the on-vehicle data has been divided in advance into different types of data to be transmitted according to a first standard. The first standard may be set according to the needs in practical applications. Herein, by way of example rather than limitation, the first standard is set according to the service type of the on-vehicle data. For example, data related to tire monitoring will be categorized into a type, data related to vehicle doors and windows will be categorized into a type, and data related to vehicle positioning will be categorized into a type, etc.

Optionally, each type of data may be further divided according to other standards as needed. For example, the data related to tire monitoring may be sub-divided into tire pressure data, tire temperature data, and so on. In the example of the present disclosure, for each of the different types of on-vehicle data to be transmitted, data that is capable of expressing expected complete content is long data. The expected complete content means it can express a complete item for the user. For example, for the tire pressure monitoring data mentioned above, data that is capable of expressing tire pressures of the four tires and temperatures of the four tires is the expected complete content.

According to the example of the present disclosure, the data in the preset format is a short message including a message header and a message body. In step 202, it should be understood that some on-vehicle data to be transmitted may express the expected complete content by using only one piece of long data, and some on-vehicle data to be transmitted may include multiple pieces of long data, where each piece of long data can express one expected complete content. In step 202, a piece of long data to be transmitted is converted into corresponding one or more short messages including a message header and a message body. The message header at least indicates a relationship between the short message where the message header is located and the long data, and the message body indicates the content represented by the short message. For example, for the tire pressure monitoring data mentioned above, a piece of long data includes the tire pressure data of the four tires and the temperature data of the four tires. According to the example of the present disclosure, if one short message cannot carry all the data of this long data, it is converted into multiple short messages. When converting the short message into multiple short messages, the message body of each short message should be able to independently express the sub-data having an independent meaning in the long data. The sub-data having an independent meaning means that the sub-data can express a piece of available data having an independent meaning after the short message is interpreted. Still taking the tire pressure monitoring data as an example, the smallest sub-data thereof may either indicate the tire pressure of a tire or the temperature of a tire. For a vehicle door and window system, the smallest sub-data thereof may either indicate whether one of the doors and windows is opened or closed, or may indicate the opening and closing degree of one of the doors and windows. In this way, even if the receiving end fails to completely receive all the short messages of one piece of long data, available information can still be obtained after parsing the remaining short messages. Without requiring each short message to represent one sub-data having an independent meaning, when a piece of long data is converted into multiple short messages, it will be arbitrarily divided according to the length of the short message, thus making it possible that one of the short messages includes the tire pressure of one tire and the ID of another tire, while the subsequent short messages include the temperature and tire pressure of another tire but fail to include the ID, etc. In this case, after the data is parsed by the receiving end, i) errors may easily occur when the data is reconstructed; and ii) the information of at least one of the received short messages cannot be used if there is any one of the short messages lost.

As far as the long data of tire pressure and tire temperature being converted into two short messages is concerned, the situation may be one of the following: one short message includes the complete tire pressure data of one tire, and the other short message includes the tire pressure data of the remaining three tires and the temperature data of the four tires; or one short message includes the tire pressure data of two tires, and another short message includes the other tire pressure and temperature data; or one short message includes all the tire pressure data and another short message includes all the temperature data, etc., without being limited to these situations listed above. In the case of converting the data into three short messages, four short messages, ..., eight short messages, the conversion method is consistent with the conversion rule of two short messages, that is, each short message can at least express the tire pressure of one tire or the temperature of one tire.

In the examples described in the present disclosure, by way of example rather than limitation, the first network is any one of a 3G network, a TD-LTE network, a TD-LTE-A network, a 4G+ network, a 5G network, and a network based on the IEEE 802 standard, and the second network is any one of the GSM, GPRS, and EDGE network, such as a 2G network or a 2.5G network. In the examples described in the present disclosure, the short message is a short message based on PDU encoding.

FIG. 3 is a schematic flowchart of the method in FIG. 2 when implemented in the application scene shown in FIG. 1. In step 300, the on-vehicle communication module 102 of the vehicle 10 transmits the vehicle-related data acquired by the sensors and cameras in the vehicle 10 and/or other electronic systems of the vehicle to the remote end 20 through the first communication network.

In step 302, during data transmission, if the on-vehicle communication module 102 finds that the first communication network is abnormal, it switches to an available network based on any one of GSM, GPRS, and EDGE mode to transmit data.

In step 304, after switching to transmitting data via the second communication network (based on any one of GSM, GPRS, and EDGE mode in this example), the long data in the data to be transmitted is converted into one or more short messages including a message header and a message body so as to be transmitted to the remote end 20 by the on-vehicle communication module. As an example, the conversion of the data to be transmitted into data in a preset format (in the example of FIG. 3, it is converted into a short message) may be performed by the communication module 102, or may be completed by a processing module independent from the communication module 102. After the processing module converts the data to be transmitted into data in a preset format, it transmits the data in the preset format to the communication module 102. As is known, the communication module itself has the ability to judge the strength of the network. For example, communication modules such as mobile phones and computers can detect whether there is a network in the environment when the power is turned on, what type of network it is (if any), and what the status of the network is. The on-vehicle communication module 102 also has these functions.

Herein, the on-vehicle data includes data related to the vehicle itself, and data related to the external environment of the vehicle (including those sensed while the vehicle is traveling and sensed when the vehicle is stationary). The data related to the vehicle itself includes, for example, vehicle tire pressure data, vehicle wheel speed, use statuses of various components such as vehicle engine, and the like. The data related to the external environment is, for example, road conditions, vehicle location, whether there are biological and non-biological objects in the vicinity of the vehicle, etc. These data can be obtained by sensors disposed on the vehicle, or by electronic components on the vehicle and a third-party system in collaboration. For example, the location information of the vehicle is obtained by the satellite positioning system such as GPS and an electronic map collectively. There are many types of on-vehicle data, and the on-vehicle data mentioned herein covers various types of data that can be transmitted through a communication network.

According to some examples of the present disclosure, the data in the preset format is a short message, and thus the long data in the preset format is converted into one or more short messages, and the message body of each short message is required to be capable of at least independently expressing the sub-data having an independent meaning in the long data.

As mentioned above, illustratively, the data in the preset format is a short message. The short message includes a message header and a message body. The message header at least indicates the relationship between the short message and the data to be transmitted, and the message body indicates the message content. The example of the present disclosure uses PDU encoded short messages. In a more specific example, 8-bit encoding is used. It should be understood that the short message as used may also be in other encoding formats, and even if in the case of PDU encoding, 7-bit method may also be used.

Table 1 shows the structure of a message header according to an example of the present disclosure. In this example, the message header occupies a total of 8 bytes, wherein sms_type occupies two bytes to distinguish different message types. When two bytes are used, there can be 65536 message types in total. For different message types, different processing strategies can be used. sms_id occupies two bytes, and it is used to identify the ID of this short message, ranging from 0 to 65535. sms_total_num occupies one byte, ranging from 0 to 255, which represents the total number by which the long message where this short message is located is divided. sms_num represents which one of the long message the short message where the message header is located is. crc is a cyclic redundancy check, which is used to ensure that the data will not be modified. Through the settings of sms_id and sms num, it can be ensured that the divided long message can be correctly combined together, thereby ensuring the accuracy of the data.

**Table 1**

| byte | byte |
|---|---|
| sms_version=0X0100 | |
| sms_type=OX0001 | |
| sms_id | |
| sms_total_num | sms_num |
| crc | |

Table 2 shows the structure of a message body according to an example of the present disclosure. In this example, the message body includes three parts, and the first part key represents the data type of the message. As mentioned above, the on-vehicle data that can be transmitted through the network includes multiple types. These types are predefined and identified by different serial numbers, and the key is a value used to identify the type of on-vehicle data transmitted. In the present disclosure, as an example, 2 bytes are allocated for the key. In the present disclosure, one byte is allocated for each value_info field and is used to represent the type information of the value. Specifically, in the example of the present disclosure, two high-order bits in the info field indicate the type, and the remaining 6 bits indicate the length. Two high-order bits of 00 indicate that the type is enumeration, two high-order bits of 01 indicate that the type is string, two high-order bits of 10 indicate that the type is numeric value, and two high-order bits of 11 indicate that the type is binary data. In the example of the present disclosure, value is a variable-length byte, and the length and type are determined by the length field in value info.

**Table 2**

| | | |
|---|---|---|
| key | value_info | value |

Table 3 is a schematic byte of value_info according to an example of the present disclosure. As mentioned above, the two high-order bits in the value info field indicate the type, and the remaining 6 bits indicate the length.

**Table 3**

| | | | | | | | |
|---|---|---|---|---|---|---|---|
| 7 | 6 | 5 | 4 | 3 | 2 | 1 | 0 |
| type | | len | | | | | |

The configuration of the short message according to the example of the present disclosure has been explained above in conjunction with Table 1, Table 2 and Table 3. It can be seen that, according to the present disclosure, when a piece of long data is converted into multiple short messages, the message header in each short message will clearly indicate how many short messages the long data where the short message is located is divided into and the order of the short messages in the long message.

An on-vehicle data transmission method according to an example of the present disclosure will be described below by taking the transmission of tire pressure monitoring data and entire-vehicle monitoring service data as an example. As an example, assuming that there are 730 pieces of on-vehicle data that can be transmitted to the remote end, with the numbering of the data being 0 to 729, which means that the value of the key in Table 2 is one of 0 to 729, including 0 and 729. The tire pressure monitoring data differentiated according to the service type requires 20 of them, and the other type of on-vehicle data, i.e., the entire-vehicle monitoring service data, requires 180 of them. It should be noted that the tire pressure monitoring data may specifically include tire pressure data and tire temperature data. The entire-vehicle monitoring service data may include data such as the statuses of the vehicle doors and windows, and the use status of the air conditioner.

Referring to FIGS. 1 and 3, if the on-vehicle communication module 102 does not find that the first communication network is abnormal during data transmission when the vehicle is traveling, data is transmitted through the first communication network. When the on-vehicle communication module 102 detects that the first communication network is abnormal, it switches to transmitting the data via the second communication network. Before transmitting the data via the second communication network, the data to be transmitted is first converted into a short message. In the example of the present disclosure, the data to be transmitted is converted into a short message in the format described above in conjunction with Table 1 and Table 2.

It is assumed herein that the vehicle enters an area B with poor network facilities from an area A with good network facilities. When the vehicle 10 is traveling in area A, the on-vehicle communication module 102 transmits data to the remote end 20 through the first communication network (such as a 4G network), as shown in step 300. When the vehicle travels to area B, if the on-vehicle communication module 102 finds that the first communication network is abnormal, for example, the first communication network cannot be detected suddenly, etc., then the on-vehicle communication module 102 switches to transmitting data via the second communication network, such as a 2G network, as shown in step 302. When switching to the second communication network to transmit data, the data processing module (not shown) provided in the vehicle 10 converts the tire pressure data of the data to be transmitted into short messages according to the formats in Table 1 and Table 2, as shown in step 304. For example, since the tire pressure and temperature data of four tires cannot be conveyed by one short message, in this example, the tire pressure data and tire temperature data of a total of four tires in the front, back, left, and right are divided into eight messages. In the message header of each message, as shown in Table 1, the sms_total_num bit indicates that there are a total of eight short messages; if the sms_num bit number is 0, it indicates that the short message where the message header is located is the first one of the eight short messages, and the data in the message body of this short message will indicate which tire's pressure the tire pressure is and how much the tire pressure is; if the sms num number is 1, it indicates that the short message where the message header is located is the second one of the eight short messages, and the data in the message body of this short message will indicate which tire's pressure the tire pressure is and how much the tire pressure is, ......, and so on, until the tire pressures of the four tires and the temperatures of the four tires are indicated by eight short messages.

After receiving the short message, the receiving end first determines whether the received short message is one of multiple short messages expressing one piece of long data according to the contents of the sms_total_num and sms_num fields. If it is, after all the short messages have been received, these short messages are combined in order to obtain complete long data. As described in this example, even if one or more of the eight short messages are missed due to any problem, the received ones can still transmit complete sub-information, or the tire pressure of any one of the four tires or the temperature of any one of the four tires.

In the example described in conjunction with the tire pressure monitoring data, if the short message itself received by the receiving end represents the content of one piece of long data, then the receiving end can directly parse the short message. If the short message is a part of the long data, then in the example of the present disclosure, the receiving end first places the received short message in a buffer, and then performs processing such as parsing after all the short messages are received. As an example, the key value in the short message is parsed and converted into a json object.

In the example of the present disclosure, the on-vehicle data transmission method according to the example of the present disclosure may be implemented by software. When the method implemented by software is performed in a vehicle, the software implementing the method may have an application program interface (API) and the like with existing software in the vehicle, such as the on-vehicle communication module.

According to yet another example of the present disclosure, an on-vehicle data receiving method is also provided. In this example, when receiving the on-vehicle data transmitted by the on-vehicle communication module through the second communication network and having a preset format, the receiving end parses and processes the received on-vehicle data. The receiving end is, for example, the external data processing device mentioned in the examples described in conjunction with FIGS. 1 to 3 above, which has been explained in detail above and will not be described again. After receiving the on-vehicle data in a preset format, the receiving end first parses the data in the preset format, and then performs corresponding processing. According to the example of the present disclosure, the transmission capacity of the second communication network is weaker than the transmission capacity of the first communication network. In this regard, detailed description has been given above and will not be repeated again. More specifically, the received on-vehicle data is divided into different types of on-vehicle data according to a first standard, and for each of the different types of on-vehicle data, the data that is capable of expressing expected complete content is long data; and the on-vehicle data in the preset format is one or more short messages including a message header and a message body corresponding to the long data and obtained after conversion. According to the present disclosure, the parsing the received on-vehicle data includes: parsing the received short message, and performing the corresponding processing if the message header indicates that the short message corresponds to the long data, or performing the corresponding processing after all the short messages corresponding to the long data are received if the message header indicates that the short message corresponds to a part of the long data.

The on-vehicle data receiving method according to the present disclosure can receive the short message transmitted by the on-vehicle data transmission method in any of the above examples, parse the received short message, and determine whether the short message is a part or all of a piece of long data according to the content of the relevant field in the message header; in other words, it is determined whether the short message corresponds to a piece of long data or a part of a piece of long data according to the content of the relevant field in the message header. If it is a part of the long data, it will be determined the short message is which one of multiple short messages corresponding to the long data, and all the short messages will be reconstructed into the long data after all the short messages are received; in some cases, if the waiting for receiving all the short messages of the long data is timed out, then the short messages will not be waited for, and the processing of reconstructing the long data is directly performed. It should also be noted that in the example of the present disclosure, the short messages are reconstructed into the long data at the receiving end, but it is not excluded in some examples that the received short messages are subjected to other processing. In this process, it should be understood that processing such as buffering the first received short message will be involved. Taking the tire pressure monitoring data mentioned above as an example, after all the eight short messages are received, the eight pieces of data represented by these eight pieces of data are combined into one piece of long data, and then subsequent processing is performed. "Subsequent processing" herein refers to the processing originally expected to be performed on the received tire pressure monitoring data by the receiving end. In some cases, the short messages are first reconstructed into the long data, and then the expected processing is performed. If it is determined according to the content of the relevant fields in the message header that the short message is all of one piece of long data, then it is directly parsed and then processed.

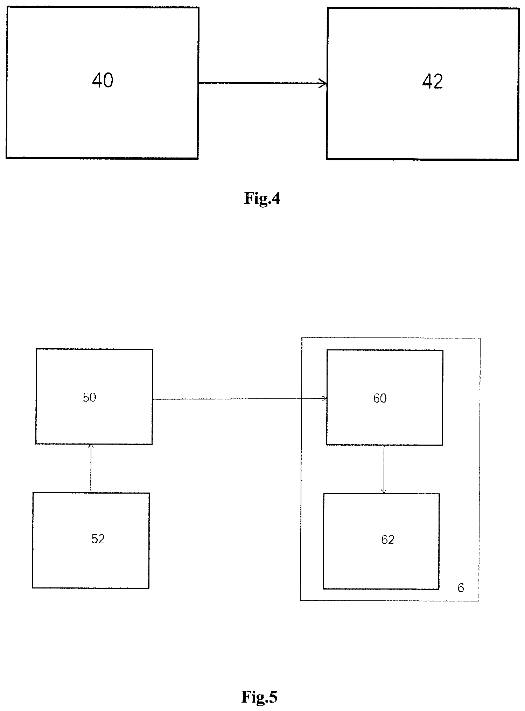

FIG. 4 is a schematic structural view of an on-vehicle data transmission system according to the present disclosure. As shown in the figure, the on-vehicle data transmission system includes an on-vehicle communication module 40 and a conversion unit 42. The on-vehicle communication module is configured to transmit on-vehicle data to an external data processing device via a network, and configured to switch to transmitting the on-vehicle data via a second communication network if it is determined that a first communication network is abnormal. According to this example, the conversion unit 42 may be a part of the on-vehicle communication module 40 or may be independent from the on-vehicle communication module 40. For example, the conversion unit 42 is implemented as a part of the on-vehicle communication module 40; or the conversion unit 42 is implemented as an independent module/component that is independent from the on-vehicle communication module 40 but can communicate with the on-vehicle communication module 40 so that when the on-vehicle communication module 40 determines to transmit the on-vehicle data via the second communication network, the conversion unit 42 converts the on-vehicle data to be transmitted into a preset format according to the judgment result, and transmits the data converted into the preset format to the on-vehicle communication module 40.

According to the example of the present disclosure, the on-vehicle data is divided into different types of on-vehicle data to be transmitted according to a first standard, and for each of the different types of on-vehicle data to be transmitted, the data that is capable of expressing expected complete content is long data. The conversion unit 42 is configured to convert the long data into corresponding one or more short messages including a message header and a message body, wherein the message header at least indicates a relationship between the short message where the message header is located and the long data, and the message body indicates the content represented by the short message. Herein, the on-vehicle data, the first standard, the long data, the message header, the message body, and the like have been described in the above examples, and will not be described again. The function implemented by the conversion unit 42 is similar to the processing unit mentioned above in the examples described in connection with FIGS. 2 and 3.

FIG. 5 is a schematic structural view of an on-vehicle data transmission system according to an example of the present disclosure. The system includes an on-vehicle communication module 50 provided in the vehicle, a conversion unit 52, a receiving unit 60 provided in an on-vehicle data receiving end 6, and a processing unit 62 provided in an on-vehicle data receiving end.

The on-vehicle communication module 50 is configured to transmit on-vehicle data via a network, and is configured to switch to transmitting on-vehicle data via a second communication network when it is determined that the first communication network is abnormal. The conversion unit 52 is configured to convert the on-vehicle data to be transmitted into data in a preset format when the on-vehicle communication module switches to transmitting the on-vehicle data via the second communication network, so that the data in the preset format is transmitted by the on-vehicle communication module. The conversion unit 52 is a part of the on-vehicle communication module 50 or independent from the on-vehicle communication module 50. The on-vehicle communication module 50 is basically the same as the on-vehicle communication module 40 described in connection with FIG. 4, and the conversion unit 52 is basically the same as the on-vehicle communication module 42 described in connection with FIG. 4. Therefore, the on-vehicle communication module 50 and the conversion unit 52 will not be described in detail herein. The receiving unit 60 of the on-vehicle data receiving end is configured to receive the on-vehicle data transmitted by the on-vehicle communication module, and the processing unit 62 of the on-vehicle data receiving end is configured to parse and process the received on-vehicle data when the data received by the receiving unit 60 is the on-vehicle data in the preset format.

The on-vehicle data transmission method and on-vehicle data receiving method according to examples of the present disclosure will be described with reference to FIG. 5. The on-vehicle communication module 50 transmits the on-vehicle data to the on-vehicle data receiving end 6 through the first network, the receiving unit 60 of the on-vehicle data receiving end 6 receives the on-vehicle data, and the processing unit 62 processes the on-vehicle data. Generally speaking, the on-vehicle communication module 50 selects the first communication network with better network performance to transmit the on-vehicle data, but in the case of abnormality in the first communication network, the on-vehicle communication module 50 will switch to transmitting the on-vehicle data via the second communication network data. In the case of switching to transmitting the on-vehicle data via the second communication network, the conversion unit 52 converts the on-vehicle data to be transmitted into a short message in a preset format. More specifically, the on-vehicle data has been divided in advance into different types of data to be transmitted according to a first standard. The first standard may be set according to the needs in practical applications. By way of example rather than limitation, the first standard is set according to the service type of the on-vehicle data. For example, data related to tire monitoring will be categorized into a type, data related to vehicle doors and windows will be categorized into a type, and data related to vehicle positioning will be categorized into a type, etc. Each type of data may be further divided according to other standards as needed. For example, the data related to tire monitoring may be sub-divided into tire pressure data, tire temperature data, and so on. In the example of the present disclosure, for each of the different types of on-vehicle data to be transmitted, data that is capable of expressing expected complete content is long data. The expected complete content means it can express a complete item for the user. The data in the preset format is a short message including a message header and a message body. Some on-vehicle data to be transmitted may express the expected complete content by using only one piece of long data, and some on-vehicle data to be transmitted may include multiple pieces of long data, where each piece of long data can express one expected complete content. The conversion unit 52 converts a piece of long data to be transmitted into corresponding one or more short messages including a message header and a message body. The message header at least indicates a relationship between the short message where the message header is located and the long data, and the message body indicates the content represented by the short message. The conversion of the long data implemented by the conversion unit 52 is basically the same as the process of converting the long data into short message described above in connection with FIGS. 2 and 3.

After receiving the short message in the preset format, the receiving unit 60 parses the short message, and from the relevant information in its message header (such as sms_type, sms_id, sms_total_num, sms_num mentioned above in the description of Table 1 to Table 3), the receiving unit 60 determines information such as the type of the short message, the id identifier, the number of short messages into which the corresponding long data is totally converted, and which one of these short messages the received short message is. If the parsing result indicates that the short message is all of the corresponding long data, in other words, the long data corresponding to the short message is only converted into this short message, then the processing unit 62 processes the data. If the parsing result indicates that the short message is a part of its corresponding long data, then the receiving end 6 will perform processing after all the short messages corresponding to the long data are received. As mentioned above, in the case of multiple short messages, the receiving end 6 will performs processing such as buffering.

According to the present disclosure, a receiving end for receiving on-vehicle data is also provided. The receiving end is, for example, the receiving end 6 in FIG. 5. It should be noted that the receiving unit 60 and the processing unit 62 may be two modules that are independent from each other and only communicate with each other and, or may be set as the same module.

According to the present disclosure, a program storage medium for storing instructions is also provided. When these instructions are executed, the above on-vehicle data transmission method described in conjunction with various examples will be implemented.

According to the present disclosure, a processor is also provided, on which instructions are stored, wherein when the instructions are executed by the processor, the above on-vehicle data transmission method described in conjunction with various examples is implemented. The processor is, for example, composed of the on-vehicle communication module 50 and the conversion unit 52 described above; or the processor is a separate device, but it is capable of controlling the operation of the on-vehicle communication module 50 and the conversion unit 52 which are in communication with the processor, so that when the instructions are executed by the processor, the on-vehicle data transmission method is implemented by the on-vehicle communication module and the conversion unit.

According to the present disclosure, another storage medium for storing instructions is provided, wherein when the instructions are executed, the on-vehicle data receiving method as described above is implemented.

According to the present disclosure, another processor for storing instructions is also provided, wherein when the instructions are executed by the processor, the above described on-vehicle data receiving method is implemented. The processor is, for example, composed of the receiving unit 60 and the processing unit 62 described above; or the processor is a separate device, but it is capable of controlling the operation of the receiving unit 60 and the processing unit 62 which are in communication with the processor, so that when the instructions are executed by the processor, the on-vehicle data transmission method is implemented by the on-vehicle communication module and the conversion unit.

No matter which one of the on-vehicle data transmission method, system and the on-vehicle data processing system according to the present disclosure is adopted, in the case that the vehicle cannot transmit data through any one of the 3G network, TD-LTE network, TD-LTE-A network, 4G+ network, 5G network, or a network based on the IEEE 802 standard, a network based on any of GSM, GPRS, or EDGE mode can be switched to. Moreover, according to the present disclosure, after the network is switched, the data to be transmitted is converted into a short message for transmission. It is assumed that if the vehicle cannot transmit data when the first communication network in a certain area has failed, and it is urgently required to send monitoring data such as tire pressure to the remote end to receive remote diagnosis, then in the case of adopting the present disclosure, the data can be transmitted by short messages to receive remote diagnosis and rescue. In the case of not adopting the technical solution provided by the present disclosure, the transmission cannot be implemented, and diagnosis and rescue cannot be received.

Using the on-vehicle data transmission method according to the examples of the present disclosure, the second communication network can be switched to for data transmission when the first communication network adopted by default by the communication module is abnormal, which is very useful in some situations where the network is poor and rescue is also required. For example, when the vehicle travels to an area with poor network and the vehicle suddenly has a failure, then in this situation, some on-vehicle data needs to be transmitted to the remote end for diagnosis by the remote end. In this case, the examples of the present disclosure are particularly advantageous.

Described above are only preferred embodiments of the present disclosure, which are not intended to limit the present disclosure in any way. Although the present disclosure has been disclosed above by way of preferred embodiments, they are not intended to define the present disclosure. Any person skilled in the art, without departing from the scope of the technical solutions of the present disclosure, can devise equivalent embodiments in which some minor equivalent changes or modifications are made based on the technical contents disclosed above. Any simple changes, equivalent variations and modifications made to the above embodiments in the light of the present disclosure without departing from the contents of the technical solutions of the present disclosure will still fall within the scope of the technical solutions of the present disclosure.

## Claims

1. An on-vehicle data transmission method, comprising:
switching to transmitting on-vehicle data via a second communication network by an on-vehicle communication module (102, 40, 50), if it is determined by the on-vehicle communication module (102, 40, 50) that a first communication network is abnormal in a process of transmitting the on-vehicle data to an external data processing device (62) via the first communication network; and
converting the on-vehicle data to be transmitted into data in a preset format for transmission when the on-vehicle communication module (102, 40, 50) switches to transmitting the on-vehicle data via the second communication network,
wherein the on-vehicle data is divided into different types of on-vehicle data to be transmitted according to a first standard, and for each of the different types of on-vehicle data to be transmitted, the data that is capable of expressing expected complete content is long data; and that the converting the on-vehicle data to be transmitted into data in the preset format is to convert the long data into corresponding one or more short messages comprising a message header and a message body, wherein the message header at least indicates a relationship between the short message where the message header is located and the long data, and the message body indicates the content represented by the short message,
**characterized in that** the long data is converted into corresponding multiple short messages based on a PDU encoding format, and that the message body of each short message is capable of independently expressing sub-data having independent meaning in the long data.

2. The on-vehicle data transmission method according to claim 1, wherein the relationship between the short message where the message header is located and the long data indicates whether the content represented by the short message is all or a part of the long data; and if the content represented by the short message is a part of the long data, the message header further indicates which part of short messages corresponding to the long data the short message where the message header is located is.

3. The on-vehicle data transmission method according to claim 1 or 2, wherein the first standard is set according to service type directed to the on-vehicle data.

4. The on-vehicle data transmission method according to any one of claims 1 to 3, wherein a transmission capacity of the first communication network is stronger than that of the second communication network.

5. An on-vehicle data receiving method, comprising:
when on-vehicle data transmitted by an on-vehicle communication module (102, 40, 50) through a second communication network and having a preset format is received, parsing and processing the received on-vehicle data;
wherein a transmission capacity of the second communication network is weaker than that of a first communication network, and the on-vehicle communication module (102, 40, 50) transmits data via the second communication network only when data transmission via the first communication network is abnormal,
wherein the on-vehicle data is divided into different types of on-vehicle data according to a first standard, and for each of the different types of on-vehicle data, the data that is capable of expressing expected complete content is long data; and wherein the on-vehicle data in the preset format is one or more short messages comprising a message header and a message body corresponding to the long data and obtained after conversion,
**characterized in that** the long data is converted into corresponding multiple short messages based on a PDU encoding format, and that the message body of each short message is capable of independently expressing sub-data having independent meaning in the long data.

6. The on-vehicle data receiving method according to claim 6, wherein the parsing the received on-vehicle data comprises:
parsing the received short message, wherein if the message header indicates that the short message corresponds to the long data, a subsequent processing is performed; if the message header indicates that the short message corresponds to a part of the long data, the parsed short message is buffered, and a subsequent processing is performed after all the short messages corresponding to the long data are received; or if not all the short messages corresponding to the long data are received but the waiting time is exceeded, a subsequent processing is performed.

7. An on-vehicle data transmission system, comprising:
an on-vehicle communication module (102, 40, 50) configured to transmit on-vehicle data to an external data processing device (62) through a network, and switch to transmitting the on-vehicle data via a second communication network if it is determined that a first communication network is abnormal; and
a conversion unit (42, 52) configured to convert the on-vehicle data to be transmitted into data in a preset format for transmission by the on-vehicle communication module, when the on-vehicle communication module (102, 40, 50) switches to transmitting the on-vehicle data via the second communication network;
wherein the conversion unit is integrated in the on-vehicle communication module (102, 40, 50) or is independent from the on-vehicle communication module,
wherein a transmission capacity of the first communication network is stronger than that of the second communication network,
wherein the on-vehicle data is divided into different types of on-vehicle data to be transmitted according to a first standard, and for each of the different types of on-vehicle data to be transmitted, the data that is capable of expressing expected complete content is long data; and the conversion unit (42, 52) is configured to convert the long data into corresponding one or more short messages comprising a message header and a message body, wherein the message header at least indicates a relationship between the short message where the message header is located and the long data, and the message body indicates the content represented by the short message,
**characterized in that** the long data is converted into corresponding multiple short messages based on a PDU encoding format, and that the message body of each short message is capable of independently expressing sub-data having independent meaning in the long data.

8. An on-vehicle data transmission system, comprising:
an on-vehicle communication module (102, 40, 50) provided in the vehicle (10), which is configured to transmit on-vehicle data via a network, and configured to switch to transmitting the on-vehicle data via a second communication network if it is determined that a first communication network is abnormal;
a conversion unit (42, 52), which is configured to convert the on-vehicle data to be transmitted into data in a preset format for transmission by the on-vehicle communication module (102, 40, 50) when the on-vehicle communication module (102, 40, 50) switches to transmitting the on-vehicle data via the second communication network, and the conversion unit (42, 52) is integrated in the on-vehicle communication module (102, 40, 50) or is independent from the on-vehicle communication module (102, 40, 50);
a receiving unit (60) provided at an on-vehicle data receiving end (20, 6), which is configured to receive the on-vehicle data transmitted by the on-vehicle communication module (102, 40, 50); and
a processing unit (62) provided at the on-vehicle data receiving end (20, 6), which is configured to parse and process the received on-vehicle data when the on-vehicle data received by the receiving unit (60) is on-vehicle data in a preset format,
wherein the on-vehicle data is divided into different types of on-vehicle data to be transmitted according to a first standard, and for each of the different types of the on-vehicle data to be transmitted, the data that is capable of expressing expected complete content is long data;
wherein the conversion unit (42, 52) is configured to convert the long data into corresponding one or more short messages comprising a message header and a message body, wherein the message header at least indicates a relationship between the short message where the message header is located and the long data, and the message body indicates the content represented by the short message,
**characterized in that** the long data is converted into corresponding multiple short messages based on a PDU encoding format, and that the message body of each short message is capable of independently expressing sub-data having independent meaning in the long data.

9. The on-vehicle data transmission system according to claim 8, wherein the processing unit (62) is configured to parse the received short messages; wherein if the message header indicates that the short message corresponds to the long data, then the processing unit performs subsequent processing; if the message header indicates that the short message corresponds to a part of the long data, then the processing unit performs subsequent processing after all the short messages corresponding to the long data are received; or if not all the short messages corresponding to the long data are received but the waiting time is exceeded, then the processing unit performs subsequent processing.

10. The on-vehicle data transmission system according to claim 8 or 9, wherein a transmission capability of the first communication network is stronger than that of the second communication network.

## Patentansprüche

1. Verfahren zum Übertragen von fahrzeuginternen Daten, umfassend:
Umschalten zum Übertragen von fahrzeuginternen Daten über ein zweites Kommunikationsnetzwerk durch ein fahrzeuginternes Kommunikationsmodul (102, 40, 50), wenn durch das fahrzeuginterne Kommunikationsmodul (102, 40, 50) ermittelt wird, dass ein erstes Kommunikationsnetzwerk in einem Prozess eines Übertragens von fahrzeuginternen Daten zu einer externen Datenverarbeitungsvorrichtung (62) über das erste Kommunikationsnetzwerk fehlerhaft ist; und
Umwandeln der zu übertragenden fahrzeuginternen Daten in Daten in ein voreingestelltes Format für eine Übertragung, wenn das fahrzeuginterne Kommunikationsmodul (102, 40, 50) zu einem Übertragen der fahrzeuginternen Daten über das zweite Kommunikationsnetzwerk umschaltet,
wobei die fahrzeuginternen Daten gemäß einem ersten Standard in verschiedene Typen von zu übertragenden fahrzeuginternen Daten geteilt werden, und wobei, für jeden der verschiedenen Typen von zu übertragenden fahrzeuginternen Daten, die Daten, die in der Lage sind, den erwarteten vollständigen Inhalt wiederzugeben, lange Daten sind; und wobei das Umwandeln der zu übertragenden fahrzeuginternen Daten in Daten in das voreingestellte Format dazu dient, die langen Daten in entsprechende eine oder mehrere kurze Nachrichten umzuwandeln, die eine Nachrichtenkopfzeile und einen Nachrichtenkörper umfassen, wobei die Nachrichtenkopfzeile mindestens eine Beziehung zwischen der kurzen Nachricht, in der sich die Nachrichtenkopfzeile befindet, und den langen Daten anzeigt, und wobei der Nachrichtenkörper den Inhalt anzeigt, der von der kurzen Nachricht dargestellt wird,
**dadurch gekennzeichnet, dass** die langen Daten aufgrund eines PDU-Codierungsformats in entsprechende mehrere kurze Nachrichten umgewandelt werden, und dadurch, dass der Nachrichtenkörper von jeder kurzen Nachricht in der Lage ist, Teildaten, die in den langen Daten eine unabhängige Bedeutung aufweisen, unabhängig voneinander wiederzugeben.

2. Verfahren zum Übertragen von fahrzeuginternen Daten nach Anspruch 1, wobei die Beziehung zwischen der kurzen Nachricht, in der sich die Nachrichtenkopfzeile befindet, und den langen Daten anzeigt, ob der Inhalt, der durch die kurze Nachricht dargestellt wird, die gesamten oder nur ein Teil der langen Daten aufweist; und wobei, wenn der Inhalt, der durch die kurze Nachricht dargestellt wird, ein Teil der langen Daten ist, die Nachrichtenkopfzeile außerdem anzeigt, welcher Teil der kurzen Nachrichten, die den langen Daten entsprechen, die kurze Nachricht, in der sich die Nachrichtenkopfzeile befindet, ist.

3. Verfahren zum Übertragen von fahrzeuginternen Daten nach Anspruch 1 oder 2, wobei der erste Standard gemäß dem Diensttyp eingestellt wird, auf den sich die fahrzeuginternen Daten beziehen.

4. Verfahren zum Übertragen von fahrzeuginternen Daten nach einem der Ansprüche 1 bis 3, wobei eine Übertragungskapazität des ersten Kommunikationsnetzwerks größer als diejenige des zweiten Kommunikationsnetzwerks ist.

5. Verfahren zum Empfangen von fahrzeuginternen Daten, umfassend:
wenn fahrzeuginterne Daten, die von einem fahrzeuginternen Kommunikationsmodul (102, 40, 50) durch ein zweites Kommunikationsnetzwerk übertragen werden und die ein voreingestelltes Format aufweisen, empfangen werden, Analysieren und Verarbeiten der empfangenen fahrzeuginternen Daten;
wobei eine Übertragungskapazität des zweiten Kommunikationsnetzwerks geringer als diejenige des ersten Kommunikationsnetzwerks ist, und wobei das fahrzeuginterne Kommunikationsmodul (102, 40, 50) nur dann Daten über das zweite Kommunikationsnetzwerk überträgt, wenn die Datenübertragung über das erste Kommunikationsnetzwerk fehlerhaft ist,
wobei die fahrzeuginternen Daten gemäß einem ersten Standard in verschiedene Typen von fahrzeuginternen Daten geteilt werden, und wobei, für jeden der verschiedenen Typen von fahrzeuginternen Daten, die Daten, die in der Lage sind, den erwarteten vollständigen Inhalt wiederzugeben, lange Daten sind; und wobei die fahrzeuginternen Daten in dem voreingestellten Format, eine oder mehrere kurze Nachrichten sind, die eine Nachrichtenkopfzeile und einen Nachrichtenkörper umfassen, den langen Daten entsprechen und nach einer Umwandlung erhalten werden,
**dadurch gekennzeichnet, dass** die langen Daten aufgrund eines PDU-Codierungsformats in entsprechende mehrere kurze Nachrichten umgewandelt werden, und dadurch, dass der Nachrichtenkörper von jeder kurzen Nachricht in der Lage ist, Teildaten, die in den langen Daten eine unabhängige Bedeutung aufweisen, unabhängig voneinander wiederzugeben.

6. Verfahren zum Empfangen von fahrzeuginternen Daten nach Anspruch 6, wobei das Analysieren der fahrzeuginternen Daten umfasst:
Analysieren der empfangenen kurzen Nachricht, wobei, wenn die Nachrichtenkopfzeile anzeigt, dass die kurze Nachricht den langen Daten entspricht, eine nachfolgende Verarbeitung durchgeführt wird; wobei, wenn die Nachrichtenkopfzeile anzeigt, dass die kurze Nachricht, einem Teil der langen Daten entspricht, die analysierte kurze Nachricht zwischengespeichert wird, und eine nachfolgende Verarbeitung durchgeführt wird, nachdem alle kurzen Nachrichten, die den langen Daten entsprechen, empfangen wurden; oder wobei, wenn nicht alle kurze Nachrichten, die den langen Daten entsprechen, empfangen wurden, aber die Wartezeit überschritten wurde, eine nachfolgende Verarbeitung durchgeführt wird.

7. System zum Übertragen von fahrzeuginternen Daten, umfassend:
ein fahrzeuginternes Kommunikationsmodul (102, 40, 50), das konfiguriert ist zum Übertragen von fahrzeuginternen Daten durch ein Netzwerk zu einer externen Datenverarbeitungsvorrichtung (62), und Umschalten zu einem Übertragen der fahrzeuginternen Daten über ein zweites Kommunikationsnetzwerk, wenn ermittelt wird, dass ein erstes Kommunikationsnetzwerk fehlerhaft ist; und
eine Umwandlungseinheit (42, 52), die konfiguriert ist zum Umwandeln der zu übertragenden fahrzeuginternen Daten in Daten in ein voreingestelltes Format für eine Übertragung durch das fahrzeuginterne Kommunikationsmodul, wenn das fahrzeuginterne Kommunikationsmodul (102, 40, 50) zu einem Übertragen der fahrzeuginternen Daten über das zweite Kommunikationsnetzwerk umschaltet,
wobei die Umwandlungseinheit in das fahrzeuginterne Kommunikationsmodul (102, 40, 50) integriert ist oder unabhängig von dem fahrzeuginternen Kommunikationsmodul ist,
wobei eine Übertragungskapazität des ersten Kommunikationsnetzwerks größer als diejenige des zweiten Kommunikationsnetzwerks ist,
wobei die fahrzeuginternen Daten gemäß einem ersten Standard in verschiedene Typen von zu übertragenden fahrzeuginternen Daten geteilt werden, und wobei, für jeden der verschiedenen Typen von zu übertragenden fahrzeuginternen Daten, die Daten, die in der Lage sind, den erwarteten vollständigen Inhalt wiederzugeben, lange Daten sind; und wobei die Umwandlungseinheit (42, 52) konfiguriert ist zum Umwandeln der langen Daten in entsprechende eine oder mehrere kurze Nachrichten, die eine Nachrichtenkopfzeile und einen Nachrichtenkörper umfassen, wobei die Nachrichtenkopfzeile mindestens eine Beziehung zwischen der kurzen Nachricht, in der sich die Nachrichtenkopfzeile befindet, und den langen Daten anzeigt, und wobei der Nachrichtenkörper den Inhalt anzeigt, der von der kurzen Nachricht dargestellt wird,
**dadurch gekennzeichnet, dass** die langen Daten aufgrund eines PDU-Codierungsformats in entsprechende mehrere kurze Nachrichten umgewandelt werden, und dadurch, dass der Nachrichtenkörper von jeder kurzen Nachricht in der Lage ist, Teildaten, die in den langen Daten eine unabhängige Bedeutung aufweisen, unabhängig voneinander wiederzugeben.

8. System zum Übertragen von fahrzeuginternen Daten, umfassend:
ein fahrzeuginternes Kommunikationsmodul (102, 40, 50), das in dem Fahrzeug (10) bereitgestellt wird und das konfiguriert ist zum Übertragen von fahrzeuginternen Daten über ein Netzwerk, und konfiguriert ist zum Umschalten zu einem Übertragen der fahrzeuginternen Daten über ein zweites Kommunikationsnetzwerk, wenn ermittelt wird, dass ein erstes Kommunikationsnetzwerk fehlerhaft ist;
eine Umwandlungseinheit (42, 52), die konfiguriert ist zum Umwandeln der zu übertragenden fahrzeuginternen Daten in Daten in ein voreingestelltes Format für eine Übertragung durch das fahrzeuginterne Kommunikationsmodul (102, 40, 50), wenn das fahrzeuginterne Kommunikationsmodul (102, 40, 50) zu einem Übertragen der fahrzeuginternen Daten über das zweite Kommunikationsnetzwerk umschaltet, und wobei die Umwandlungseinheit (42, 52) in das fahrzeuginterne Kommunikationsmodul (102, 40, 50) integriert ist oder unabhängig von dem fahrzeuginternen Kommunikationsmodul (102, 40, 50) ist;
eine Empfangseinheit (60), die an einem fahrzeuginternen Datenempfangsende (20, 6) bereitgestellt wird und die konfiguriert ist zum Empfangen der fahrzeuginternen Daten, die durch das fahrzeuginterne Kommunikationsmodul (102, 40, 50) übertragen werden; und
eine Verarbeitungseinheit (62), die an dem fahrzeuginternen Datenempfangsende (20, 6) bereitgestellt wird und die konfiguriert ist zum Analysieren und Verarbeiten der empfangenen fahrzeuginternen Daten, wenn die fahrzeuginternen Daten, die in der Empfangseinheit (60) empfangen werden, fahrzeuginterne Daten in einem voreingestellten Format sind,
wobei die fahrzeuginternen Daten gemäß einem ersten Standard in verschiedene Typen von zu übertragenden fahrzeuginternen Daten geteilt werden, und wobei, für jeden der verschiedenen Typen der zu übertragenden fahrzeuginternen Daten, die Daten, die in der Lage sind, den erwarteten vollständigen Inhalt wiederzugeben, lange Daten sind;
wobei die Umwandlungseinheit (42, 52) konfiguriert ist zum Umwandeln der langen Daten in entsprechende eine oder mehrere kurze Nachrichten, die eine Nachrichtenkopfzeile und einen Nachrichtenkörper umfassen, wobei die Nachrichtenkopfzeile mindestens eine Beziehung zwischen der kurzen Nachricht, in der sich die Nachrichtenkopfzeile befindet, und den langen Daten anzeigt, und wobei der Nachrichtenkörper den Inhalt anzeigt, der von der kurzen Nachricht dargestellt wird,
**dadurch gekennzeichnet, dass** die langen Daten aufgrund eines PDU-Codierungsformats in entsprechende mehrere kurze Nachrichten umgewandelt werden, und dadurch, dass der Nachrichtenkörper von jeder kurzen Nachricht in der Lage ist, Teildaten, die in den langen Daten eine unabhängige Bedeutung aufweisen, unabhängig voneinander wiederzugeben.

9. System zum Übertragen von fahrzeuginternen Daten nach Anspruch 8, wobei die Verarbeitungseinheit (62) konfiguriert ist zum Analysieren der empfangenen kurzen Nachrichten; wobei, wenn die Nachrichtenkopfzeile anzeigt, dass die kurze Nachricht den langen Daten entspricht, die Verarbeitungseinheit eine nachfolgende Verarbeitung durchführt; wobei, wenn die Nachrichtenkopfzeile anzeigt, dass die kurze Nachricht, einem Teil der langen Daten entspricht, die die Verarbeitungseinheit eine nachfolgende Verarbeitung durchführt, nachdem alle kurzen Nachrichten, die den langen Daten entsprechen, empfangen wurden; oder wobei, wenn nicht alle kurze Nachrichten, die den langen Daten entsprechen, empfangen wurden, aber die Wartezeit überschritten wurde, die Verarbeitungseinheit eine nachfolgende Verarbeitung durchführt.

10. System zum Übertragen von fahrzeuginternen Daten nach Anspruch 8 oder 9, wobei eine Übertragungsfähigkeit des ersten Kommunikationsnetzwerks größer als diejenige des zweiten Kommunikationsnetzwerks ist.

## Revendications

1. Procédé de transmission de données de véhicule, comprenant :
le passage à la transmission de données de véhicule par l'intermédiaire d'un second réseau de communication par un module de communication de véhicule (102, 40, 50), s'il est déterminé par le module de communication de véhicule (102, 40, 50) qu'un premier réseau de communication est anormal dans un processus de transmission des données de véhicule à un dispositif de traitement de données externe (62) par l'intermédiaire du premier réseau de communication ; et
la conversion des données de véhicule à transmettre en données dans un format prédéfini pour la transmission lorsque le module de communication de véhicule (102, 40, 50) passe à la transmission des données de véhicule par l'intermédiaire du second réseau de communication,
dans lequel les données de véhicule sont divisées en différents types de données de véhicule à transmettre selon une première norme, et pour chacun des différents types de données de véhicule à transmettre, les données qui sont capables d'exprimer un contenu complet attendu sont des données longues ; et la conversion des données de véhicule à transmettre en données dans le format prédéfini consiste à convertir les données longues en un ou plusieurs messages courts correspondants comprenant un en-tête de message et un corps de message, dans lequel l'en-tête de message indique au moins une relation entre le message court où se trouve l'en-tête de message et les données longues, et le corps de message indique le contenu représenté par le message court,
**caractérisé en ce que** les données longues sont converties en de multiples messages courts correspondants sur la base d'un format de codage PDU, et **en ce que** le corps de message de chaque message court est capable d'exprimer indépendamment des sous-données ayant une signification indépendante dans les données longues.

2. Procédé de transmission de données de véhicule selon la revendication 1, dans lequel la relation entre le message court où se trouve l'en-tête de message et les données longues indique si le contenu représenté par le message court constitue tout ou partie des données longues ; et si le contenu représenté par le message court constitue une partie des données longues, l'en-tête de message indique en outre quelle partie des messages courts correspondant aux données longues est le message court où se trouve l'en-tête de message.

3. Procédé de transmission de données de véhicule selon la revendication 1 ou 2, dans lequel la première norme est établie selon le type de service destiné aux données de véhicule.

4. Procédé de transmission de données de véhicule selon l'une quelconque des revendications 1 à 3, dans lequel une capacité de transmission du premier réseau de communication est plus élevée que celle du second réseau de communication.

5. Procédé de réception de données de véhicule, comprenant :
lorsque des données de véhicule transmises par un module de communication de véhicule (102, 40, 50) par l'intermédiaire d'un second réseau de communication et ayant un format prédéfini sont reçues, l'analyse syntaxique et le traitement des données de véhicule reçues ;
dans lequel une capacité de transmission du second réseau de communication est plus faible que celle d'un premier réseau de communication, et le module de communication de véhicule (102, 40, 50) ne transmet des données par l'intermédiaire du second réseau de communication que lorsque la transmission de données par l'intermédiaire du premier réseau de communication est anormale,
dans lequel les données de véhicule sont divisées en différents types de données de véhicule selon une première norme, et pour chacun des différents types de données de véhicule, les données qui sont capables d'exprimer un contenu complet attendu sont des données longues ; et dans lequel les données de véhicule dans le format prédéfini sont un ou plusieurs messages courts comprenant un en-tête de message et un corps de message correspondant aux données longues et obtenu après conversion,
**caractérisé en ce que** les données longues sont converties en de multiples messages courts correspondants sur la base d'un format de codage PDU, et **en ce que** le corps de message de chaque message court est capable d'exprimer indépendamment des sous-données ayant une signification indépendante dans les données longues.

6. Procédé de réception de données de véhicule selon la revendication 6, dans lequel l'analyse syntaxique des données de véhicule reçues comprend :
l'analyse syntaxique du message court reçu, dans lequel si l'en-tête de message indique que le message court correspond aux données longues, un traitement ultérieur est effectué ; si l'en-tête de message indique que le message court correspond à une partie des données longues, le message court analysé syntaxiquement est mis en mémoire tampon, et un traitement ultérieur est effectué après que tous les messages courts correspondant aux données longues ont été reçus ; ou si tous les messages courts correspondant aux données longues ne sont pas reçus mais que le temps d'attente est dépassé, un traitement ultérieur est effectué.

7. Système de transmission de données de véhicule, comprenant :
un module de communication de véhicule (102, 40, 50) configuré pour transmettre des données de véhicule à un dispositif de traitement de données externe (62) par l'intermédiaire d'un réseau, et passer à la transmission des données de véhicule par l'intermédiaire d'un second réseau de communication s'il est déterminé qu'un premier réseau de communication est anormal ; et
une unité de conversion (42, 52) configurée pour convertir les données de véhicule à transmettre en données dans un format prédéfini pour la transmission par le module de communication de véhicule, lorsque le module de communication de véhicule (102, 40, 50) passe à la transmission des données de véhicule par l'intermédiaire du second réseau de communication ;
dans lequel l'unité de conversion est intégrée dans le module de communication de véhicule (102, 40, 50) ou est indépendante du module de communication de véhicule,
dans lequel une capacité de transmission du premier réseau de communication est plus élevée que celle du second réseau de communication,
dans lequel les données de véhicule sont divisées en différents types de données de véhicule à transmettre selon une première norme, et pour chacun des différents types de données de véhicule à transmettre, les données qui sont capables d'exprimer un contenu complet attendu sont des données longues ; et l'unité de conversion (42, 52) est configurée pour convertir les données longues en un ou plusieurs messages courts correspondants comprenant un en-tête de message et un corps de message, dans lequel l'en-tête de message indique au moins une relation entre le message court où se trouve l'en-tête de message et les données longues, et le corps de message indique le contenu représenté par le message court,
**caractérisé en ce que** les données longues sont converties en de multiples messages courts correspondants sur la base d'un format de codage PDU, et **en ce que** le corps de message de chaque message court est capable d'exprimer indépendamment des sous-données ayant une signification indépendante dans les données longues.

8. Système de transmission de données de véhicule, comprenant :
un module de communication de véhicule (102, 40, 50) prévu dans le véhicule (10), qui est configuré pour transmettre des données de véhicule par l'intermédiaire d'un réseau, et configuré pour passer à la transmission des données de véhicule par l'intermédiaire d'un second réseau de communication s'il est déterminé qu'un premier réseau de communication est anormal ;
une unité de conversion (42, 52), qui est configurée pour convertir les données de véhicule à transmettre en données dans un format prédéfini pour la transmission par le module de communication de véhicule (102, 40, 50) lorsque le module de communication de véhicule (102, 40, 50) passe à la transmission des données de véhicule par l'intermédiaire du second réseau de communication, et l'unité de conversion (42, 52) est intégrée dans le module de communication de véhicule (102, 40, 50) ou est indépendante du module de communication de véhicule (102, 40, 50) ;
une unité de réception (60) prévue à une extrémité de réception de données de véhicule (20, 6), qui est configurée pour recevoir les données de véhicule transmises par le module de communication de véhicule (102, 40, 50) ; et
une unité de traitement (62) prévue à l'extrémité de réception de données de véhicule (20, 6), qui est configurée pour analyser syntaxiquement et traiter les données de véhicule reçues lorsque les données de véhicule reçues par l'unité de réception (60) sont des données de véhicule dans un format prédéfini,
dans lequel les données de véhicule sont divisées en différents types de données de véhicule à transmettre selon une première norme, et pour chacun des différents types de données de véhicule à transmettre, les données qui sont capables d'exprimer un contenu complet attendu sont des données longues ;
dans lequel l'unité de conversion (42, 52) est configurée pour convertir les données longues en un ou plusieurs messages courts correspondants comprenant un en-tête de message et un corps de message, dans lequel l'en-tête de message indique au moins une relation entre le message court où se trouve l'en-tête de message et les données longues, et le corps de message indique le contenu représenté par le message court,
**caractérisé en ce que** les données longues sont converties en de multiples messages courts correspondants sur la base d'un format de codage PDU, et **en ce que** le corps de message de chaque message court est capable d'exprimer indépendamment des sous-données ayant une signification indépendante dans les données longues.

9. Système de transmission de données de véhicule selon la revendication 8, dans lequel l'unité de traitement (62) est configurée pour analyser syntaxiquement les messages courts reçus ; dans lequel si l'en-tête de message indique que le message court correspond aux données longues, alors l'unité de traitement effectue un traitement ultérieur ; si l'en-tête de message indique que le message court correspond à une partie des données longues, alors l'unité de traitement effectue un traitement ultérieur après que tous les messages courts correspondant aux données longues ont été reçus ; ou si tous les messages courts correspondant aux données longues ne sont pas reçus mais que le temps d'attente est dépassé, l'unité de traitement effectue un traitement ultérieur.

10. Système de transmission de données de véhicule selon la revendication 8 ou 9, dans lequel une capacité de transmission du premier réseau de communication est plus élevée que celle du second réseau de communication.
